# EUROPÄISCHE PATENTSCHRIFT

(11) **EP 1 515 054 B1**
(45) Veröffentlichungstag und Bekanntmachung des Hinweises auf die Patenterteilung: **08.11.2006**
(21) Anmeldenummer: 04020920.7
(22) Anmeldetag: 02.09.2004
(51) Int. Cl.: F16B 5/02

(54) **Toleranzausgleichsanordnung**
Tolerance compensating arrangement
Dispositif de compensation de tolérance

(30) Priorität: 09.09.2003 DE 20314003 U
(43) Veröffentlichungstag der Anmeldung: 16.03.2005
(60) Teilanmeldung: 06010164.9
(73) Patentinhaber: Böllhoff Verbindungstechnik GmbH, 33649 Bielefeld (DE)
(72) Erfinder: Grubert, Klaus Friedrich, 31675 Bückeburg (DE); Kirchhecker, Uwe, 33605 Bielefeld (DE); Kassing, Frank, 32647 Bielefeld (DE)
(74) Vertreter: Wehnert, Werner

(56) Entgegenhaltungen:
- DE-A- 10 151 383
- DE-U- 20 119 112
- US-A- 4 043 239
- US-B1- 6 357 953

## Beschreibung

Die vorliegende Erfindung betrifft eine Toleranzausgleichsanordnung zum selbsttätigen Ausgleich fertigungs- und/oder montagehedingter Toleranzen im Abstand zwischen einem ersten Bauteil und einem zweiten Bauteil nach dem Oberbegriff des Anspruchs 1.

Es sind bereits zahlreiche Toleranzausgleichsanordnungen zum Ausgleich derartiger Toleranzen in der Vor- bzw. Endmontage von Baugruppen bekannt. Insbesondere sind bereits Toleranzausgleichsanordnungen bekannt, bei denen der Toleranzausgleich ohne Einfluss des Monteurs, also selbsttätig erfolgt, um die Montagezeit so kurz wie möglich zu halten. Verwiesen sei in diesem Zusammenhang beispielsweise auf die DE 100 04 687 A1, EP 0 176 663 A1 und EP 0 848 168 A1. Alle diese Toleranzausgleichsanordnungen erfordern jedoch vergleichsweise viele Einzelteile, was einen entsprechenden Fertigungsaufwand und damit relativ hohe Herstellungskosten bedingt.

Die DE 101 51 383 A1 der Anmelderin offenbart eine Toleranzausgleichsanordnung zum selbsttätigen Ausgleich fertigungs- und/oder montagebedingter Toleranzen im Abstand zwischen einem ersten Bauteil und einem zweiten Bauteil, mit einer Befestigungsschraube, einem am ersten Bauteil vorgesehenen Basiselement mit einer Gewindebohrung, die ein Verstellgewinde und ein Befestigungsgewinde unterschiedlichen Durchmessers aufweist, und einer Verstellbuchse mit einer Durchgangsbohrung und einem am Außenumfang vorgesehenen Gewinde, wobei das Verstellgewinde des Basiselementes und das Gewinde der Verstellbuchse eine Gewindepaarung einer bestimmten Gangrichtung zum Verstellen der Verstellbuchse zwecks Toleranzausgleich bildet und das Befestigungsgewinde des Basiselementes und das Gewinde der Befestigungsschraube eine Gewindepaarung der entgegengesetzten Gangrichtung zum Festziehen der Toleranzausgleichsanordnung bilden, und die Verstellbuchse einen Mitschleppabschnitt hat, der mit der Befestigungsschraube eine Reibschlussverbindung bildet, welche, wenn die durch die Verstellbuchse hindurchgesteckte Befestigungsschraube gedreht wird, die Verstellbuchse mitdreht und welche, wenn sich die Verstellbuchse nach dem Toleranzausgleich an das zweite Bauteil angelegt hat und die Befestigungsschraube weiter gedreht wird, sich löst, um die Befestigungsschraube mit dem Befestigungsgewinde des Basiselemente verspannen zu können.

Bei dieser Toleranzausgleichsanordnung besteht der Mitschleppabschnitt der Verstellbuchse aus einem Klemmabschnitt in Form federnder Finger, die durch axiale Schlitze in der Verstellbuchse gebildet sind. Das Basiselement besteht aus einer Blindnietmutter, die mittels eines Nietwulstes an dem zugehörigen Bauteil so festgelegt ist, dass sowohl das Verstellgewinde wie auch das Befestigungsgewinde auf der von dem Bauteil axial abgewandten Seite des Nietwulstes liegen.

Eine Toleranzausgleichsanordnung nach dem Oberbegriff des Patentanspruchs 1 ist aus US 6,357,953 B1, Fig. 7, 8 bekannt. Bei dieser Toleranzausgleichsanordnung besteht der Mitschleppabschnitt der Verstellbuchse aus einem Kunststoffeinsatz, der an der Innenwand der Durchgangsbohrung der Verstellbuchse befestigt ist. Der Kunststoffeinsatz ist mit mehreren Verlängerungen bzw. Fingern versehen, die im eingebauten Zustand an dem einen Bauteil anliegen bzw. in eine Öffnung dieses Bauteils greifen, um als Transportsicherung zu dienen.

Der vorliegenden Erfindung liegt die Aufgabe zugrunde, eine Toleranzausgleichsanordnung der angegebenen Gattung hinsichtlich ihrer Eigenschaften, Funktionsweise und Handhabung zu verbessern, ohne dass die Einfachheit der Toleranzausgleichsanordnung darunter leidet.

Die Toleranzausgleichsanordnung gemäß der vorliegenden Erfindung ist in Patentanspruch 1 definiert.

Gemäß der Erfindung wird der Mitschleppabschnitt von einem inneren ringförmigen Kunststoffabschnitt der Verstellbuchse gebildet, der aus der Bohrungswand der Verstellbuchse radial nach innen soweit vorsteht, dass er mit dem Gewinde der Befestigungsschraube die Reibschlussverbindung bilden kann. Zusätzlich ist die Verstellbuchse mit einem äußeren ringförmigen Kunststoffabschnitt versehen, der über das Gewinde der Verstellbuchse radial nach außen soweit vorsteht, dass er beim Einschrauben der Verstellbuchse in das Basiselement als Anschlagsbegrenzung (Verkonterungssicherung) und/oder Transportsicherung dient. Die beiden ringförmigen Kunststoffabschnitte sind zweckmäßigerweise durch Kunststoffzwischenstege verbunden, so dass sie insgesamt durch einen einzigen Spritzgießvorgang hergestellt werden können.

Der innere Umfang des inneren ringförmigen Kunststoffabschnittes kann als Mehrkantfläche ausgebildet werden, so dass der Toleranzausgleich auch manuell durch ein entsprechendes Werkzeug ausgeführt werden kann.

Weitere vorteilhafte Ausgestaltungen und Weiterbildungen der Erfindung gehen aus den Unteransprüchen hervor.

Anhand der Zeichnung werden Ausführungsbeispiele der Erfindung näher erläutert. Es zeigt:
Fig. 1 eine perspektivische Ansicht einer Befestigungsschraube;
Fig. 2 eine perspektivische, aufgeschnittene Ansicht einer Verstellbuchse;
Fig. 3 eine perspektivische, aufgeschnittene Ansicht eines als Blindnietmutter ausgebildeten Basiselementes mit erstem Bauteil;
Fig. 4 eine vergrößerte Schnittdarstellung der Verstellbuchse in Fig. 2;
Fig. 5 bis 9 der Fig. 3 entsprechende Darstellungen verschiedener Ausführungsformen das Basiselementes.

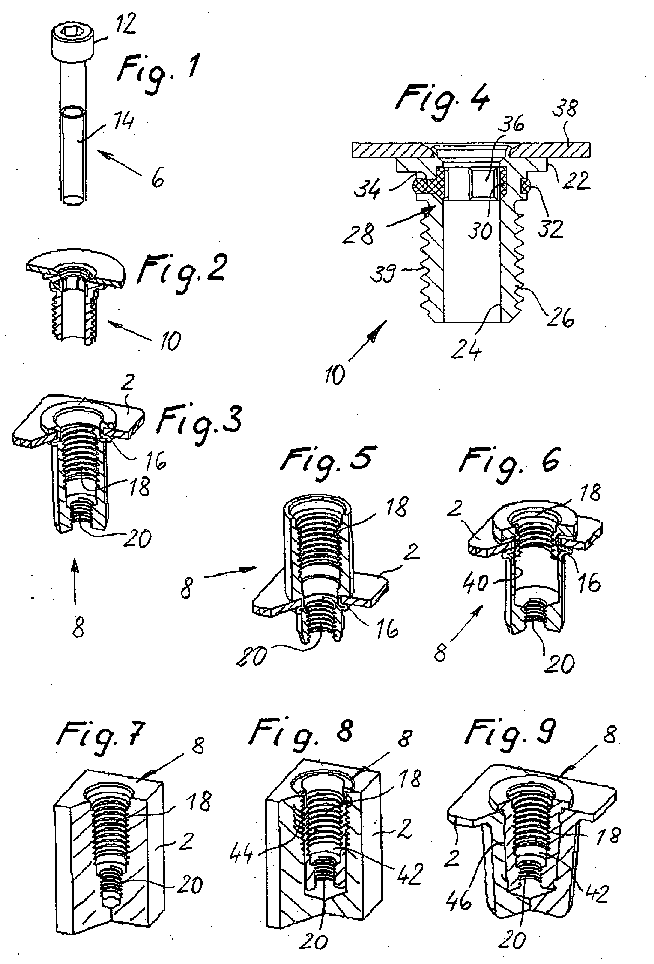

Die in der Zeichnung dargestellte Toleranzausgleichsanordnung besteht im Prinzip aus drei Teilen, und zwar einer Befestigungsschraube 6 (Fig. 1), einem Basiselement 8 (Fig. 3) und einer Verstellbuchse 10 (Fig. 2). Der grundsätzliche Aufbau der dargestellten Toleranzausgleichsanordnung entspricht weitgehend dem der Fig. 1 bis 4 in der oben erwähnten DE 101 51 383 A1, so dass diesbezüglich eine kurze Zusammenfassung genügt.

Die Toleranzausgleichsanordnung dient zum Verspannen eines plattenförmigen ersten Bauteils 2 (Fig. 3) und eines plattenförmigen zweiten Bauteils (nicht dargestellt) und gleichzeitigen Toleranzausgleich im Abstand zwischen den beiden vormontierten Bauteilen, welcher aufgrund fertigungsbedingter Bauteiltoleranzen und/oder montagebedingter Toleranzen in der Vor- bzw. Endmontage Schwankungen unterliegt.

Die Befestigungsschraube 6 ist eine übliche Schraube, z. B. eine genormte Schraube, mit einem Kopf 12 und einem Gewinde 14.

Das Basiselement 8 in Fig. 3 ist eine Blindnietmutter, die durch einen Nietwulst 16 am Bauteil 2 festgelegt ist. Das Basiselement 8 hat ein Verstellgewinde 18 und ein axial dazu versetztes Befestigungsgewinde 20.

Die Verstellbuchse 10 (Fig. 2 und 4) hat einen Buchsenkörper mit einem an einem Ende vorgesehenen Flansch 22, einer Durchgangsbohrung 24 und einem am Außenumfang vorgesehenen Gewinde 26.

Das Gewinde 26 der Verstellbuchse 28 bildet mit dem Verstellgewinde 18 des Basiselementes 8 eine (z. B. linksgängige) Gewindepaarung, während das Befestigungsgewinde 20 der Verstellbuchse 8 mit dem Gewinde 14 der Befestigungsschraube 6 eine entgegengerichtete (z. B . rechtsgängige) Gewindepaarung bildet.

Die Verstellbuchse 10 ist ferner mit einem Mitschleppabschnitt 28 versehen, der mit dem Gewinde 14 der Befestigungsschraube 6 eine Reibschlussverbindung bilden kann, wenn die Befestigungsschraube 6 in die Verstellbuchse 10 eingesteckt wird. Der Mitschleppabschnitt 28 ist so ausgebildet, dass sich die Befestigungsschraube 6 relativ zur Verstellbuchse 28 drehen kann, wenn der Reibschluss überwunden wird.

Die insoweit beschriebene Toleranzausgleichsanordnung entspricht in ihrem grundsätzlichen Aufbau, wie bereits erwähnt, der Toleranzausgleichsanordnung in den Fig. 1 bis 4 der DE 101 51 383 A1. Unterschiedlich gegenüber diesem Stand der Technik ist jedoch die konstruktive Ausgestaltung der Verstellbuchse 10, wie sie insbesondere aus Fig. 4 hervorgeht.

Wie dargestellt, besteht der Mitschleppabschnitt 28 aus einem ringförmigen Kunststoffabschnitt 30, der in einer entsprechenden Ringnut des Buchsenkörpers der Verstellbuchse 10 sitzt. Der ringförmige Kunststoffabschnitt 30 steht über die Wand der Durchgangsbohrung 24 radial nach innen soweit vor, dass er die gewünschte Mitschleppfunktion ausüben kann, wie noch genauer erläutert wird.

Die Verstellbuchse 10 ist ferner mit einem äußeren ringförmigen Kunststoffabschnitt 32 versehen, der über den Außenumfang des Gewindes 26 radial etwas vorsteht, wie ebenfalls noch genauer erläutert wird. Der innere ringförmige Kunststoffabschnitt 30 und der äußere ringförmige Kunststoffabschnitt 32 sind durch Kunststoffzwischenstege 34 verbunden, die durch radiale Bohrungen im Buchsenkörper der Verstellbuchse 28 verlaufen. Diese Verbindung der beiden ringförmigen Kunststoffabschnitte 30, 32 erlaubt es, den gesamten Kunststoff durch einen einzigen Spritzgießvorgang in die z. B. aus Stahl bestehende Verstellbuchse 10 einzubringen.

Wie sich Fig. 4 entnehmen lässt, ist der Innenumfang 36 des ringförmigen Kunststoffabschnittes 30 als Mehrkantfläche ausgebildet, die als Angriffsfläche für ein entsprechend gestaltetes, manuell zu betätigendes Werkzeug (nicht gezeigt) dienen. Die Verstellbuchse 10 kann somit auch manuell verstellt werden, was ebenfalls noch genauer erläutert wird.

An dem Flansch 22 der Verstellbuchse 10 ist ferner eine Scheibe 38 durch einen Niet- oder Bördelvorgang so angebracht, dass die Scheibe 38 relativ zu dem übrigen Teil der Verstellbuchse 10 drehbar ist. Bei Anlage der Verstellbuchse 10 an dem zweiten Bauteil (nicht gezeigt) kann daher die Verstellbuchse 10 gedreht werden, während die Scheibe 38 an dem zweiten Bauteil fest anliegt, so dass die Gefahr eines Zerkratzens oder einer anderen Beschädigung des zweiten Bauteils vermieden ist.

Die Funktionsweise der beschriebenen Toleranzausgleichsanordnung ist wie folgt:
Zunächst wird das als Blindnietmutter ausgebildete Basiselement 8 mit dem ersten Bauteil 2 durch einen Nietvorgang (Nietwulst 16) fest verbunden. Die Verstellbuchse 10 wird dann in das Basiselement 8 eingeschraubt, bis ihr äußerer ringförmiger Kunststoffabschnitt 32 in Anlage mit dem Basiselement 8 gelangt. Vor Erreichen der maximalen Einschraubtiefe steigt dann das Reibmoment zwischen dem äußeren Umfang des Kunststoffabschnittes 32 der Verstellbuchse 10 und Verstellgewinde 18 des Basiselementes 8 so an, dass es größer wird als das Antriebsmoment des Einschraubwerkzeuges. Hierdurch wird der Einschraubvorgang beendet, ehe eine Verkanterung zwischen der Verstellbuchse 10 und dem Basiselement 8 eintreten kann. Gleichzeitig dient der äußere ringförmige Kunststoffabschnitt 32 als Transportsicherung, so das das Bauteil 2 mit dem daran befestigten Basiselement 8 und der eingeschraubten Verstellbuchse 10 als Einheit gehandhabt werden können, ohne dass die Gefahr besteht, dass sich die Verstellbuchse 10 löst.

Statt der oben beschriebenen reibschlüssigen (kraftschlüssigen) Verkonterungssicherung zwischen Verstellbuchse 10 und Basiselement 8 kann auch eine formschlüssige Verkonterungssicherung im Form von Anschlägen oder Vergleichen vorgesehen werden, die mit einer kraftschlüssigen Verliersicherung kombiniert werden kann.

Wenn das erste Bauteil 2 und das zweite Bauteil (nicht gezeigt) mit gegenseitigem Abstand vormontiert sind, wird die Befestigungsschraube 6 durch zueinander ausgerichtete Löcher der beiden Bauteile in die Durchgangsbohrung 24 der Verstellbuchse 10 gesteckt, bis das Gewinde 14 der Befestigungsschraube 6 mit dem inneren ringförmigen Kunststoffabschnitt 30 der Verstellbuchse 10 in Eingriff gelangt. Wird die Befestigungsschraube 6 mittels eines Schraubenschlüssels (nicht gezeigt) gedreht, so wird die Verstellbuchse 10 durch den Reibschluss zwischen dem Kunststoffabschnitt 30 und dem Gewinde 14 der Befestigungsschraube 6 mitgedreht. Da das Gewinde 26 der Verstellbuchse 10 und das Verstellgewinde 18 des Basiselementes 8 als linksgängige Gewindepaarung (also gegensinnig zum rechtsgängigen Gewinde der Befestigungsschraube 6) ausgebildet sind, wird die Verstellbuchse 10 von der Befestigungsschraube 6 entgegen der Einsteckrichtung aus dem Basiselement 8 herausgedreht, bis sich die Verstellbuchse 10 mit der Scheibe 38 an der Unterseite des zweiten Bauteils (nicht gezeigt) anlegt, wodurch der Toleranzausgleich erfolgt ist.

Da nun die Verstellbuchse 10 aufgrund ihrer Anlage am zweiten Bauteil axial nicht mehr verstellt werden kann, lässt sie sich von der Befestigungsschraube 6 nicht mehr weiterdrehen. Die Befestigungsschraube 6 kann daher unter Überwindung des Reibschlusses zwischen dem Kunststoffabschnitt 30 der Verstellbuchse 10 und dem Gewinde 14 der Befestigungsschraube 6 mit dem Befestigungsgewinde 20 des Basiselementes 8 in Eingriff gebracht und verschraubt werden. Sobald sich der Kopf 12 der Befestigungsschraube 6 am zweiten Bauteil abstützt, kann die Befestigungsschraube 6 mit dem notwendigen Anziehmoment angezogen werden, wodurch die beiden Bauteile im vorgegebenen Abstand miteinander verspannt werden.

Wie bereits erwähnt, ist der innere ringförmige Kunststoffabschnitt 30 der Verstellbuchse 10 an seinem Innenumfang als Mehrkantfläche 36 ausgebildet. Statt des beschriebenen automatischen Toleranzausgleiches kann daher die Verstellbuchse 10 mittels eines an der Mehrkantfläche 36 angreifenden Schraubenschlüssels manuell verstellt werden. Um die Verstellbuchse 10 in diesem Fall gegen unbeabsichtigtes Verdrehen zu sichern, wird das Gewinde 26 der Verstellbuchse 10 zweckmäßigerweise mit einer chemischen oder mechanischen Gewindesicherung 39 versehen. Die chemische Gewindesicherung besteht beispielsweise aus einem mikrogekapselten Kleber, einem aufgeschmolzenen Kunststoffelement, Polyamidflecken oder dergleichen. Da derartige Gewindesicherungen hinlänglich bekannt sind, wird hierauf nicht näher eingegangen.

Die konstruktive Einfachheit der beschriebenen Toleranzausgleichsanordnung erlaubt es, die Befestigungsschraube 6 und die Verstellbuchse 10 mit unterschiedlichsten Ausführungsformen des Basiselementes 8 zu paaren, was der Toleranzausgleichsanordnung eine Art Modulcharakter verleiht. Die Fig. 5 bis 9 zeigen unterschiedliche Ausführungsformen des Basiselementes 8, die jeweils anstelle des Basiselementes 8 in Fig. 3 verwendet werden können.

Bei der in Fig. 3 dargestellten Ausführungsform des Basiselementes 8 sind das Verstellgewinde 18 und das Befestigungsgewinde 20 beide auf der von dem Bauteil 2 axial abgewandten Seite des Nietwulstes (also unterhalb des Bauteils 2) angeordnet. Im Gegensatz hierzu sind bei der Ausführungsform der Fig. 5 das Verstellgewinde 18 und das Befestigungsgewinde 20 auf axial gegenüberliegenden Seiten des Nietwulstes 16 angeordnet; d. h., dass sich das Verstellgewinde 18 oberhalb des Bauteils 2 befindet. Diese Ausgestaltung des Basiselementes 8 hat den Vorteil, dass beim Festziehen der Befestigungsschraube 6 die Anzugskraft über die Gewindepaarung 14, 20 unmittelbar auf den Nietwulst 16 und von da auf das Bauteil 2 übertragen wird. Falls daher beim Setzen des Nietwulstes 16 dieser nicht vollständig ausgeformt wurde, wird der Setzvorgang durch das Verspannen der Toleranzausgleichsanordnung mittels der Befestigungsschraube 6 zu Ende geführt.

Da bei der Ausführungsform der Fig. 5 das oberhalb des Bauteils 2 liegende Verstellgewinde 16 ungefähr die gleiche axiale Länge wie das Gewinde 26 der Verstellbuchse 10 hat, ergibt sich eine relativ große Aufbauhöhe des Basiselementes 8 oberhalb des Bauteils 2. Wenn der Abstand zwischen dem ersten Bauteil 2 und dem zweiten Bauteil (nicht gezeigt) nicht groß genug ist, um diese Aufbauhöhe aufzunehmen, kann das Basiselement wie in Fig. 6 ausgebildet werden.

Bei dem Ausführungsbeispiel der Fig. 6, bei dem das Basiselement 8 wieder als Blindnietmutter ausgebildet ist, ist das Verstellgewinde 18 dem Nietwulst 16 so zugeordnet, dass es zwar oberhalb des Nietwulstes 16 liegt, sich jedoch durch die Ebene des plattenförmigen Bauteils 2 erstreckt. Außerdem hat das Verstellgewinde 18 eine kleinere axiale Länge als bei den Ausführungsbeispielen der Fig. 3 und 5. Damit nun die Verstellbuchse 10 ausreichend weit in das Basiselement 8 hineingeschraubt werden kann, ist das Basiselement 8 unterhalb des Verstellgewindes 18 mit einem Hinterschnitt 40 versehen, der das Gewinde 26 der Verstellbuchse 10 aufnehmen kann. Aufgrund dieser Ausgestaltung hat das Basiselement eine sehr viel kleinere Aufbauhöhe oberhalb des Bauteils 2 als das Basiselement 8 der Fig. 5, wobei jedoch der Vorteil erhalten bleibt, dass das Verstellgewinde 18 auf der vom Befestigungsgewinde 20 abgewandten Seite des Nietwulstes 16 liegt. Die Anzugskraft beim Festziehen der Befestigungsschraube 6 wird daher auch bei dieser Ausführungsform unmittelbar über den Nietwulst 16 auf das Bauteil 2 übertragen.

Bei dem in Fig. 7 dargestellten Ausführungsbeispiel ist kein getrenntes Basisteil vorgesehen. Vielmehr wird das Basisteil 8 von dem Bauteil 2 selbst gebildet. Anders ausgedrückt, sind das Verstellgewinde 18 und das Befestigungsgewinde 20 unmittelbar in das Bauteil 8 eingearbeitet, das beispielsweise aus einem Aluminiumblock besteht.

Eine weitere Möglichkeit besteht darin, das Basisteil 8 als buchsenförmigen Einsatz zum Einsetzen in das blockförmig ausgebildete Bauteil 2 auszubilden, wie dies die Fig. 8 und 9 zeigen.

Bei der Ausführungsform der Fig. 8 ist der Einsatz 42 als Gewindeeinsatz ausgebildet, der mit seinem Außengewinde 44 in das Bauteil eingeschraubt ist. Hierzu kann das Bauteil 2 mit einer entsprechenden vorgefertigten Gewindebohrung versehen sein. Stattdessen kann jedoch das Gewinde 44 des buchsenförmigen Einsatzes 42 auch als selbstschneidendes, selbstfurchendes Gewinde ausgebildet werden, mit dem das Basiselement 8 in ein aus Holz, Kunststoff oder Metall bestehendes Bauteil 2 oder ein mit einem Dübelsystem versehenes Bauteil eingeschraubt werden kann.

Bei dem Ausführungsbeispiel der Fig. 9 hat der Einsatz 42 mit dem Verstellgewinde 18 und dem Befestigungsgewinde 20 eine profilierte, beispielsweise abgestufte Außenkontur 46, durch die er im Bauteil 2 verankert wird. Beispielsweise kann der Einsatz 42 in das aus Kunststoff bestehende Bauteil 2 durch Aufschmelzen oder dergleichen eingebettet werden.

Da sowohl Gewindeeinsätze entsprechend Fig. 8 und eingebettete Einsätze gemäß Fig. 9 in großer Vielfalt bekannt sind, ist eine weitere Erläuterung nicht erforderlich.

Bei dem anhand der Fig. 4 beschriebenen Ausführungsbeispiel wird die Mitschleppfunktion zwischen der Befestigungsschraube 6 und der Verstellbuchse 10 durch den inneren ringförmigen Kunststoffabschnitt 30 des Mitschleppabschnittes 28 erzielt. Eine andere Möglichkeit besteht darin, die Befestigungsschraube 6 im Bereich ihres Gewindes 4 mit einer Kunststoffbeschichtung zu versehen, die dann mit der Wand der Durchgangsbohrung 24 der Verstellbuchse 10 eine Reibschlussverbindung bildet, durch die die Verstellbuchse 10 beim Einschrauben der Befestigungsschraube 6 mitgedreht wird. Die Kunststoffbeschichtung kann auf dem gesamten Gewinde 14 oder auch nur auf einem Teil des Gewindes 14 der Befestigungsschraube 6 vorgesehen werden. Ferner kann die Kunststoffbeschichtung auf dem Gewinde 14 der Befestigungsschraube 6 so angeordnet werden, dass sie gleichzeitig als Schraubenverliersicherung im Befestigungsgewinde 20 des Basiselementes 8 dient.

## Patentansprüche

1. Toleranzausgleichsanordnung zum selbsttätigen Ausgleich fertigungs- und/oder montagebedingter Toleranzen im Abstand zwischen einem ersten Bauteil (2) und einem zweiten Bauteil, mit
einer Befestigungsschraube (6),
einem am ersten Bauteil (2) vorgesehenen Basiselement (8) mit einer Gewindebohrung, die ein Verstellgewinde (18) und ein Befestigungsgewinde (20) unterschiedlichen Durchmessers aufweist, und
einer Verstellbuchse (10) mit einer Durchgangsbohrung (24) und einem am Außenumfang vorgesehenen Gewinde (26),
wobei das Verstellgewinde (18) des Basiselementes (8) und das Gewinde (26) der Verstellbuchse (10) eine Gewindepaarung einer bestimmten Gangrichtung zum Verstellen der Verstellbuchse zwecks Toleranzausgleich bildet und das Befestigungsgewinde (20) des Basiselementes (8) und das Gewinde (14) der Befestigungsschraube (6) eine Gewindepaarung der entgegengesetzten Gangrichtung zum Festziehen der Toleranzausgleichsanordnung bilden, und
die Verstellbuchse (10) einen Mitschleppabschnitt (28) hat, der mit der Befestigungsschraube (8) eine Reibschlussverbindung bildet, welche, wenn die durch die Verstellbuchse (10) hindurch gesteckte Befestigungsschraube (6) gedreht wird, die Verstellbuchse (10) mitdreht und welche, wenn sich die Verstellbuchse (10) nach dem Toleranzausgleich an das zweite Bauteil angelegt hat und die Befestigungsschraube weiter gedreht wird, sich löst, um die Befestigungsschraube (6) mit dem Befestigungsgewinde (20) des Basiselementes (8) verspannen zu können,
welcher Mitschleppabschnitt (28) von einem inneren ringförmigen Kunststoffabschnitt (30) der Verstellbuchse (10) gebildet wird, der aus der Wand der Durchgangsbohrung (24) der Verstellbuchse (10) radial nach innen soweit vorsteht, dass er mit dem Gewinde (14) der Befestigungsschraube (6) die Reibschlussverbindung bilden kann,
**dadurch gekennzeichnet, dass** die Verstellbuchse (10) mit einem äußeren ringförmigen Kunststoffabschnitt (32) versehen ist, der über das Gewinde (26) der Verstellbuchse (10) radial nach außen soweit vorsteht, dass er beim Einschrauben der Verstellbuchse (10) in das Basiselement (8) als kraftschlüssige oder formschlüssige Verkonterungssicherung und/oder Transportsicherung dient.

2. Toleranzausgleichsanordnung nach Anspruch 1, **dadurch gekennzeichnet, dass** der innere und äußere ringförmige Kunststoffabschnitt (30, 32) durch Kunststoffzwischenstege (34) verbunden sind, die sich durch radiale Bohrungen der Verstellbuchse (10) erstrecken.

3. Toleranzausgleichsanordnung nach Anspruch 2, **dadurch gekennzeichnet, dass** der innere und äußere ringförmige Kunststoffabschnitt (30, 32) und die Kunststoffzwischenstege (34) durch Spritzgießen hergestellt sind.

4. Toleranzausgleichsanordnung nach einem der vorhergehenden Ansprüche, **dadurch gekennzeichnet, dass** der innere Umfang des inneren Kunststoffabschnittes (30) der Verstellbuchse (10) als Mehrkantfläche (36) zum manuellen Verstellen der Verstellbuchse (10) ausgebildet ist.

5. Toleranzausgleichsanordnung nach Anspruch 4, **dadurch gekennzeichnet, dass** die manuell eingestellte Verstellbuchse (10) durch eine chemische oder mechanische Gewindesicherung gegen unbeabsichtigtes Drehen sicherbar ist.

6. Toleranzausgleichsanordnung nach einem der vorhergehenden Ansprüche, **dadurch gekennzeichnet, dass** die Verstellbuchse (10) an einem Kopfende mit einer als Anlage dienenden Scheibe (38) versehen ist, die relativ zu dem übrigen Teil der Verstellbuchse (10) drehbar ist.

## Claims

1. A tolerance compensating assembly for automatically compensating variations of a spacing between first (2) and second structural members due to manufacturing and/or mounting tolerances, comprising:
a mounting bolt (6),
a base element (8) provided at said first structural member (2) and having a threaded bore provided with adjustment threads (18) and mounting threads (20) of different diameters, and
an adjustment sleeve (10) having a thru-bore (24) and external threads (26),
said adjustment threads (18) of said base element (8) and said external threads (26) of said adjustment sleeve (10) forming a pair of threads of a predetermined spiral direction to allow for adjustment of said adjustment sleeve for compensation purposes, and said mounting threads (20) of said base element (8) and said external threads (14) of said mounting bolt (6) forming a pair of threads of a spiral direction opposite to said first mentioned spiral direction to allow for fixing said assembly, and
said adjustment sleeve (10) having a drive portion (28) for providing frictional drag between said adjustment sleeve and said mounting bolt (6) so that rotation of the mounting bolt (6) when inserted into the adjustment sleeve (10) causes rotation of the adjustment sleeve, so that when the adjustment sleeve (10) after compensation of variations has engaged said second structural member and said mounting bolt (6) is rotated further, frictional drag between said mounting bolt (6) and said adjustment sleeve (10) is overcome in order to enable the mounting bolt (6) to be clampingly fixed to said base element (8),
said drive portion (28) comprising an internal annular plastic portion of said adjustment sleeve (10), which projects from the wall of the thru-bore (24) of the adjustment sleeve (10) radially inwards sufficiently so as to provide said frictional drag between said drive portion and said external threads (14) of said mounting bolt (6),
**characterized in that** said adjustment sleeve (10) has an external annular plastic portion (32) projecting beyond said external threads (26) of said adjustment sleeve (10) radially outwards sufficiently so as to provide frictional and/or positive engagement lock-nut securing means and/or transportation securing means when said adjustment sleeve (10) is threaded into the base element (8).

2. The tolerance compensating assembly of claim 1, **characterized in that** said internal and external annular plastic portions (30, 32) are interconnected by plastic webs (34) extending through radial bores of said adjustment sleeve (10).

3. The tolerance compensating assembly of claim 2, **characterized in that** said internal and external plastic portions (30, 32) and said plastic webs (34) are made by injection molding.

4. The tolerance compensating assembly of any of the preceding claims, **characterized in that** said internal annular plastic portion (30) of said adjustment sleeve (10) has an inner periphery comprising a polygonal surface (36) for manually adjusting said adjustment sleeve (10).

5. The tolerance compensating assembly of claim 4, wherein said adjustment sleeve (10) when manually adjusted is adapted to be fixed by chemical or mechanical securing means.

6. The tolerance compensating assembly of any of the preceding claims, **characterized in that** said adjustment sleeve (10) has a head portion comprising a disk member (38) serving as an abutment and adapted to be rotated relative to the remainder of the adjustment sleeve (10).

## Revendications

1. Dispositif de compensation de tolérance pour la compensation automatique de tolérances, dues à la fabrication et/ou au montage, de l'intervalle entre un premier composant (2) et un deuxième composant,
avec une vis de fixation (6),
un élément de base (8) prévu sur le premier composant (2), avec un alésage taraudé qui présente un filet de réglage (18) et un filet de fixation (20) de diamètre différent, et
une douille de réglage (10) avec un alésage traversant (24) et un filet (26) prévu sur la circonférence extérieure,
le filet de réglage (18) de l'élément de base (8) et le filet (26) de la douille de réglage (10) formant un accouplement fileté avec une direction du pas définie pour le réglage de la douille de réglage en vue de la compensation de tolérance, et le filet de fixation (20) de l'élément de base (8) et le filet (14) de la vis de fixation (6) formant un accouplement fileté avec une direction du pas opposée pour le blocage du dispositif de compensation de tolérance, et
la douille de réglage (10) a un segment d'entraînement (28) qui forme avec la vis de fixation (8) une liaison par friction qui, quand on fait tourner la vis de fixation (6) enfichée à travers la douille de réglage (10), entraîne solidairement la douille de réglage (10) et qui, quand la douille de réglage (10), après la compensation de tolérance, appuie contre le deuxième composant et quand la vis de fixation continue à être mise en rotation, se desserre afin de pouvoir serrer la vis de fixation (6) avec le filet de fixation (20) de l'élément de base (8),
lequel segment d'entraînement (28) est formé d'un segment en matière plastique (30) de forme annulaire intérieur de la douille de réglage (10) qui dépasse, dans le sens radial vers l'intérieur, de la paroi de l'alésage traversant (24) de la douille de réglage (10) jusqu'à ce qu'il puisse former la liaison par friction avec le filet (14) de la vis de fixation (6),
**caractérisé en ce que** la douille de réglage (10) est munie d'un segment en matière plastique (32) annulaire extérieur qui, via le filet (26) de la douille de réglage (10), dépasse dans le sens radial vers l'extérieur au point que, lors du vissage de la douille de réglage (10) dans l'élément de base (8), il sert d'arrêt par blocage par contre-écrou et/ou d'arrêt de transport, par adhérence ou par crabotage.

2. Dispositif de compensation de tolérance selon la revendication 1, **caractérisé en ce que** les segments en matière plastique (30, 32) de forme annulaire intérieur et extérieur sont raccordés par des entretoises en matière plastique (34) qui s'étendent à travers des alésages radiaux de la douille de réglage (10).

3. Dispositif de compensation de tolérance selon la revendication 2, **caractérisé en ce que** les segments en matière plastique (30, 32) de forme annulaire intérieur et extérieur et les entretoises en matière plastique (34) sont réalisés par moulage par injection.

4. Dispositif de compensation de tolérance selon une des revendications précéentes, **caractérisé en ce que** la circonférence intérieure du segment en matière plastique (30) intérieur de la douille de réglage (10) est constitué en tant que surface polygonale (36) pour le réglage manuel de la douille de réglage (10).

5. Dispositif de compensation de tolérance selon la revendication 4, **caractérisé en ce que** la douille de réglage (10) réglée manuellement peut être bloquée contre une rotation involontaire par un arrêt fileté chimique ou mécanique.

6. Dispositif de compensation de tolérance selon une des revendications précédentes, **caractérisé en ce que** la douille de réglage (10) est, sur une extrémité de tête, munie d'un disque (38) servant d'appui et qui peut tourner par rapport à la partie restante de la douille de réglage (10).
